# DEMANDE DE BREVET EUROPEEN

(11) **EP 1 645 382 A1**
(43) Date de publication de la demande: **12.04.2006**
(21) Numéro de dépôt: 05447166.9
(22) Date de dépôt: 08.07.2005
(51) Int. Cl.: B29B 17/00

(54) **Procédé pour l'obtention d'un matériau à partir de déchets solides de polystyrène expansé et d'autres déchets solides**

(30) Priorité: 06.10.2004 BE 200400489
(71) Demandeur: Bertrand, André Raoul, 4031 Angleur (BE)
(72) Inventeur: Bertrand, André Raoul, 4031 Angleur (BE)

(57) **Abrégé**

Le procédé permet le traitement conjoint de déchets solides de polystyrène expansé, y compris les déchets de polystyrène souillés ou combinés à d'autres matières, et d'autres déchets de l'industrie ou de l'agriculture dans le but d'obtenir un matériau pour la production de biens ou utilisable comme combustible.

Les déchets de polystyrène expansé sont dissous dans un combustible liquide pour former une pâte. Les autres déchets sont préparés pour obtenir une matière sèche. La matière sèche et la pâte sont introduites dans un mélangeur. Le mélange obtenu est un matériau qui est traité pour son utilisation comme combustible ou comme matière première pour la fabrication de produits divers.

## Description

La présente invention est un procédé de traitement conjoint de déchets solides de polystyrène expansé, y compris les déchets de polystyrène souillés ou combinés à d'autres matières, et d'autres déchets de l'industrie ou de l'agriculture dans le but d'obtenir un matériau pour la production de biens ou utilisable comme combustible.

Le polystyrène expansé est un matériau qui, sous forme solide, présente une faible masse volumique (de 5 à 60 kilos par m³) et qui est largement utilisé pour ses qualités de protection, d'isolation et de conservation.

Le polystyrène expansé solide est un matériau très encombrant et les déchets solides de polystyrène expansé nécessitent de grands espaces de stockage.

Il existe divers procédés de recyclage :
Certains consistent en un recyclage mécanique des emballages usés mais propres, qui sont broyés et dépoussiérés puis mélangés avec des billes neuves de polystyrène expansé ou mélangés avec d'autres matières comme du mortier pour produire des matériaux allégés.
Certains consistent à fondre les déchets de polystyrène expansé pour en refaire des granulés ou d'autres produits.

Il existe également des procédés physico-chimiques consistant à dissoudre le polystyrène expansé dans un solvant puis à récupérer le polystyrène par un traitement approprié de la solution. Il existe différents procédés suivant le solvant utilisé et le traitement appliqué.

Il existe également différents dispositifs permettant d'augmenter la masse volumique du polystyrène expansé pour en faciliter le transport. Le broyage et le compactage mécanique, éventuellement combiné avec une augmentation de température. La dissolution du polystyrène expansé par un solvant dans un container, indépendant ou monté sur un véhicule.

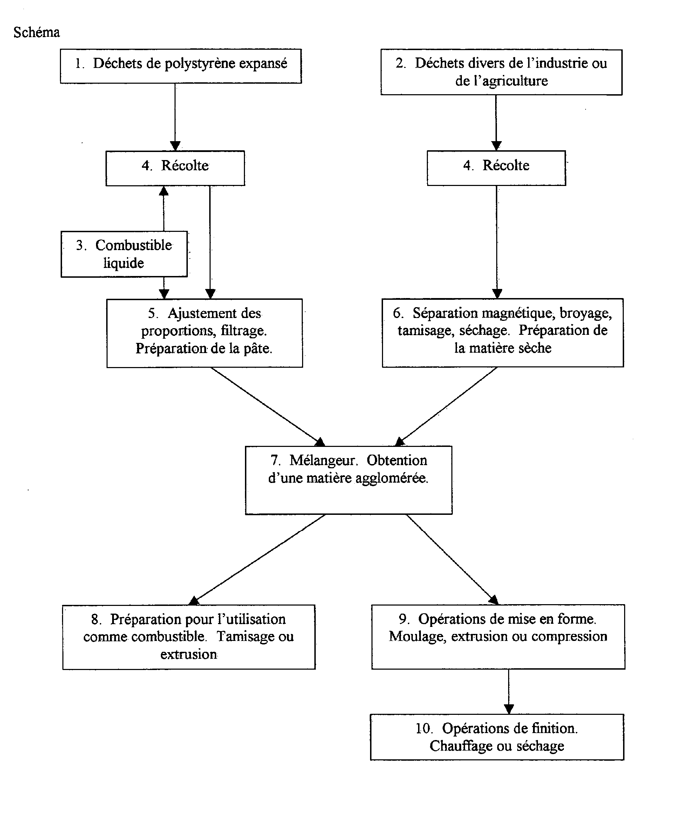

## Revendications

1. Un procédé de traitement des déchets de polystyrène expansé qui permet la valorisation de ces déchets conjointement avec la valorisation d'autres déchets de l'industrie ou de l'agriculture.

2. Un procédé suivant la revendication 1 qui consiste à collecter les déchets de polystyrène expansé avec un container de forme quelconque et muni d'un dispositif permettant d'augmenter la masse volumique du polystyrène expansé, à mélanger ces déchets récoltés avec un élément combustible puis avec d'autres déchets à valoriser de manière à obtenir un matériau pour la production de produits divers ou un combustible utilisable en substitut des produits combustibles classiques (charbon, produits pétroliers, bois et autres). Le mélange des déchets de polystyrène expansé et de l'élément combustible peut se faire directement dans le container de récolte et avant transport de celui-ci de manière à dissoudre le polystyrène expansé et à transporter directement une grande quantité de déchets.

3. Un procédé suivant la revendication 2 :
- dans lequel l'élément combustible utilisé peut être de l'essence de pétrole, du mazout ou d'autres huiles de pétrole, des huiles végétales ou d'autres substances chimiques inflammables.
- dans lequel le mélange de polystyrène expansé et du combustible est mélangé avec d'autres déchets de l'industrie ou de l'agriculture tels que la sciure de bois, les déchets de bois broyés, les déchets de papier, les déchets de cartons, les pailles de riz, les pailles de céréales, les herbes séchées et broyées, les écorces de cacao, les écorces de noix de coco, les autres sous-produits de l'agriculture assimilables, les déchets alimentaires séchés et broyés, les farines animales, les déchets de plastique et autres. Le mélange final peut contenir un ou plusieurs de ces déchets.

4. Un procédé suivant la revendication 2 dont le produit est un matériau sec ou légèrement pâteux. Ce matériau est un combustible facile à manipuler. Il est également possible de l'utiliser comme matière première pour la fabrication de produits divers tels que panneaux, poutres, objets décoratifs ou fonctionnels.
Description détaillée de l'invention
Le procédé de l'invention utilise un container pour la récolte des déchets de polystyrène expansé. Ce container est mis à la disposition des récoltants ou est monté sur un véhicule pour effectuer la récolte du polystyrène expansé. Ce container est muni d'un système permettant d'immerger le polystyrène expansé dans un liquide combustible dans lequel il se dissout ou d'un système permettant de verser le combustible sur le polystyrène expansé pour le dissoudre.
Le container est transporté dans une installation où il est vidé et conditionné pour une nouvelle collecte de déchets de polystyrène expansé.
Le mélange de polystyrène expansé et du combustible est filtré pour enlever les plus grosses impuretés non dissoutes. Les proportions de combustible et de polystyrène expansé sont ajustées pour obtenir une pâte dont la consistance convient pour l'obtention du produit final.
Les autres déchets sont traités pour obtenir une matière sèche ne contenant pas de métaux ni de matériaux indésirables. Ce traitement peut comprendre une séparation magnétique, un broyage, un tamisage, un séchage, une agglomération des poussières et fines particules ainsi que d'autres opérations spécifiques pour chaque déchet considéré. Ce traitement contient également le mélange des différents déchets.
La matière sèche et la pâte sont introduites dans un mélangeur. Le mélange obtenu est un matériau qui est traité pour son utilisation comme combustible ou comme matière première pour la fabrication de produits divers.
Ce mélange peut être tamisé ou aggloméré dans une extrudeuse. Il peut être versé dans un moule et comprimé par une presse. Les produits obtenus par ces opérations peuvent finalement être chauffés ou tenus dans un endroit sec. Ces dernières opérations permettent d'obtenir un produit sec et dur.
